# EUROPEAN PATENT APPLICATION

(11) **EP 4 656 786 A1**
(43) Date of publication of application: **03.12.2025**
(21) Application number: 23960604.9
(22) Date of filing: 08.12.2023
(51) Int. Cl.: D04H 1/4391, H01M 50/44

(54) **NON-WOVEN FABRIC, SEPARATOR, AND BATTERY**

(71) Applicant: Shenzhen Senior Technology Material Co., Ltd., Shenzhen, Guangdong 518106 (CN)
(72) Inventor: CHEN, Li, Shenzhen, Guangdong 518106 (CN); WANG, Yanjie, Shenzhen, Guangdong 518106 (CN); LIN, Lujing, Shenzhen, Guangdong 518106 (CN)
(74) Representative: Bryn Aarflot AS
(86) International application number: PCT/CN2023/137604
(87) International publication number: WO 2025/118293

(57) **Abstract**

The present invention provides a non-woven fabric, a separator, and a battery. The non-woven fabric includes a structural fiber, and the structural fiber includes a circular cross-section fiber and a profiled fiber; and a cross section of at least part of the profiled fibers has a perimeter coefficient being X_{L}, with 1<X_{L}≤5. The present invention can improve the strength of the non-woven fabric while maintaining its relatively small thickness, thereby simultaneously improving the safety, cycle life, energy density and other properties of the battery.

## Description

### TECHNICAL FIELD

The present invention relates to the technical field of non-woven fabric materials, and in particular to a non-woven fabric, a separator and a battery.

### BACKGROUND

Non-woven fabric inherently possesses large pore size and high porosity, and has characteristics such as high-temperature resistance, having good application prospects in the field of energy storage devices like batteries. For example, the non-woven fabric can be used to form a non-woven fabric separator for use in batteries. However, in related technologies, it is usually difficult to balance the strength and thickness of the non-woven fabric. If the thickness of the non-woven fabric is small, its strength is low, which is unfavorable to the safety and cycle life of the battery; whereas if the thickness of the non-woven fabric is increased, the energy density and other properties of the battery would be affected.

### SUMMARY

The present invention provides a non-woven fabric, a separator and a battery, which can improve the strength of non-woven fabric while maintaining its relatively small thickness, thereby balancing the safety, cycle life, energy density and other properties of the battery.

In one aspect of the present invention, a non-woven fabric is provided, which includes a structural fiber, and the structural fiber includes a circular cross-section fiber and a profiled fiber; and a cross section of at least part of the profiled fiber has a perimeter coefficient being X_{L}, with 1<X_{L}≤5.

In another aspect of the present invention, a separator is provided, which includes the non-woven fabric.

In yet another aspect of the present invention, a battery is provided, which includes a positive electrode sheet, a negative electrode sheet and the aforementioned separator, and the separator is located between the positive electrode sheet and the negative electrode sheet.

In the present invention, the structural fiber of the non-woven fabric includes a circular cross-section fiber and a profiled fiber, and the perimeter coefficient X_{L} of the cross section of at least part of the profiled fiber is controlled to satisfy 1<X_{L}≤5. By introducing these structural fibers with specific morphologies, it is beneficial for sufficient adhesion between the fibers in the non-woven fabric, forming a robust network structure, significantly improving the strength of the non-woven fabric while maintaining the relatively small thickness of the non-woven fabric. Specifically, the non-woven fabric may exhibit a longitudinal tensile strength of up to 469kgf/cm² or more, or even up to 540kgf/cm² or more, and a transverse tensile strength of up to 300kgf/cm² or more, or even up to 330kgf/cm² or more, with a thickness of no more than 25µm. Therefore, the present invention provides a thin and high-strength non-woven fabric, which can be used for a separator and applied to electrochemical energy storage devices such as lithium-ion batteries, balancing the safety, cycle life, and energy density and other properties of the electrochemical energy storage devices such as lithium-ion batteries.

### BRIEF DESCRIPTION OF DRAWINGS

FIG. 1 is a schematic diagram of a cross-section shape (cross shape) of a profiled fiber in an embodiment of the present invention.
FIG. 2 is a schematic diagram of a cross-section shape (semicircular ring shape) of a profiled fiber in another embodiment of the present invention.
FIG. 3 is a schematic diagram of a cross-section shape (seven-eighths circle shape) of a profiled fiber in another embodiment of the present invention (A in FIG. 3 showing a central angle, and B in FIG. 3 showing a depth at a deepest point and a width at a widest point).
FIG. 4 is a schematic diagram of a cross-section shape (octagonal star shape) of a profiled fiber in another embodiment of the present invention.
FIG. 5 is a schematic diagram of a cross-section shape (S-shape) of a profiled fiber in another embodiment of the present invention.
FIG. 6 is a schematic diagram of a cross-section shape (decagonal star shape) of a profiled fiber in another embodiment of the present invention.
FIG. 7 is a schematic diagram of a cross-section shape (" 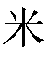 "-shape) of a profiled fiber in another embodiment of the present invention.
FIG. 8 is a schematic diagram of a cross-section shape (dodecagonal star shape) of a profiled fiber in another embodiment of the present invention.
FIG. 9 is a schematic diagram of a cross-section shape (hexadecagonal star shape) of a profiled fiber in another embodiment of the present invention.
FIG. 10 is a schematic diagram of a cross-section shape (meniscus shape) of a profiled fiber in another embodiment of the present invention.
FIG. 11 is a schematic diagram of a cross-section shape (quadrangular star shape) of a profiled fiber in another embodiment of the present invention.
FIG. 12 is a schematic diagram of a cross-section shape (T-shape) of a profiled fiber in another embodiment of the present invention.
FIG. 13 is a schematic diagram of a cross-section shape (cross shape) of a profiled fiber in another embodiment of the present invention.
FIG. 14 is a schematic diagram of a cross-section shape (crescent shape) of a profiled fiber in another embodiment of the present invention.
FIG. 15 is a schematic diagram of a cross-section shape (W-shape) of a profiled fiber in another embodiment of the present invention.
FIG. 16 is a schematic diagram of a cross-section shape (N-shape) of a profiled fiber in another embodiment of the present invention.
FIG. 17 is a schematic diagram of a cross-section shape (U-shape) of a profiled fiber in another embodiment of the present invention.
FIG. 18 is a schematic diagram of a cross-section shape (open circular shape) of a profiled fiber in another embodiment of the present invention.
FIG. 19 is a schematic diagram of a cross-section shape (pentagonal shape) of a profiled fiber in another embodiment of the present invention.
FIG. 20 is a schematic diagram of a cross-section shape (incomplete circular ring shape) of a profiled fiber in another embodiment of the present invention.
FIG. 21 is a differential scanning calorimetry curve of a fiber.

Description of reference signs: 1: cross section of a profiled fiber; 10: groove; 100: circumscribed circle; w: width of a groove at its widest point; h: depth of a groove at its deepest point.

### DESCRIPTION OF EMBODIMENTS

In order to enable the person skilled in the art to better understand the solutions of the present invention, the present invention is further described in detail below. The specific implementations listed below are only for describing the principles and features of the present invention and the embodiments given are only used for explaining the present invention, which are not intended to limit the scope of the present invention. Based on the embodiments of the present invention, all other implementations obtained by the person skilled in the art without making creative work fall within the protection scope of the present invention.

With the development of technical fields such as new energy vehicles and 3C, lithium-ion batteries have gradually gained widespread application. At the same time, higher and higher requirements have been proposed on the properties of lithium-ion batteries, such as energy density and safety. For example, the theoretical energy density of the existing power battery system has gradually reached its technical upper limit, and further breakthroughs are difficult.

Specifically, liquid batteries require the use of a separator to separate the positive electrode and negative electrode, and the use of an electrolyte solution for ion conduction. The safety of the liquid battery has always been an aspect in urgent need of improvement, where the properties of conventional separators such as polyolefin separators in liquid batteries, for example thermal stability, are poor, which poses many constraints on the safety of liquid batteries.

Compared with a liquid battery, a semi-solid-state battery and a solid-state battery have more advantages in terms of safety, energy density and cycle life, gradually attracting widespread attention. The separators in the semi-solid-state battery and solid-state battery can replace the electrolyte solution to play the role of electrolyte, which puts high requirements on the properties of the separators, such as the strength thereof. Where, the semi-solid-state battery still needs an electrolyte solution for ion conduction and a separator for insulation and isolation, which puts forward higher requirements on the strength, heat resistance and other properties of the separator.

Non-woven fabric inherently possesses large pore size and high porosity, having good application prospects in the field of energy storage devices such as batteries. For example, the non-woven fabric may be used for a non-woven fabric separator, which is widely used in the technical fields such as lead-acid batteries, alkaline batteries, nickel-metal hydride batteries and supercapacitors. The non-woven fabric has the advantages such as high-temperature resistance and high porosity, and especially the safety advantage compared with traditional polyolefin separators, making it have good application prospects in large batteries, especially suitable for energy storage and power battery that requires large size and long cycle life, thus attracting more and more attention from the lithium battery industry.

However, in the related art, it is usually difficult to balance the strength and thickness of the non-woven fabric. If the thickness of the non-woven fabric is reduced, its strength will decrease accordingly, which is unfavorable to the safety and cycle life of the battery. If the thickness of the non-woven fabric is increased, it will affect the energy density and other properties of the battery.

In view of this, a non-woven fabric is provided by some embodiments of the present invention. The non-woven fabric includes a structural fiber, which includes a circular cross-section fiber and a profiled fiber; and the cross section 1 of at least part (i.e., part or all) of profiled fibers has a perimeter coefficient being X_{L}, with 1<X_{L}≤5.

Specifically, the above-mentioned non-woven fabric may contain one shape of profiled fibers (i.e., the cross-sections 1 of these profiled fibers are identical in shape), or multiple different shapes of profiled fibers (i.e., the cross-sections 1 of at least part of the profiled fibers are different in shape). When there are multiple different shapes of profiled fibers, the perimeter coefficient X_{L} of the cross-section 1 of at least one shape of the profiled fibers satisfies 1<X_{L}≤5. That is, it can be that the perimeter coefficient X_{L} of the cross-section 1 of one type of profiled fiber satisfies 1<X_{L}≤5, or the perimeter coefficients X_{L} of the cross-sections 1 of at least two types of profiled fibers satisfy 1<X_{L}≤5.

Exemplarily, the perimeter coefficient of the cross section 1 of the above-mentioned at least part of the profiled fibers may be 1.5, 2, 3, 4, 5 or a range composed of any two thereof.

Specifically, the profiled fiber is a non-circular cross-section fiber, that is, its cross section 1 is non-circular, and the cross section 1 is perpendicular to an axial direction of the profiled fiber (which is generally also a length direction of the profiled fiber). The perimeter coefficient X_{L} of the cross section 1 of the profiled fiber is equal to a ratio of the perimeter C₀ of the cross section 1 of the profiled fiber to the perimeter C₁ of a circle with the same area as the cross section 1 of the profiled fiber (i.e., X_{L}=C₀/C₁), which can be specifically measured by the perimeter coefficient determination method in the Textile Industry Standard of the People's Republic of China FZ/T 50002-2013 (Testing method for shape factor of man-made fiber).

Specifically, the cross section of the circular cross-section fiber is basically circular, and the cross section is perpendicular to the axial direction of the circular cross-section fiber (which is generally also the length direction of the circular cross-section fiber).

In the above-mentioned non-woven fabric, the structural fiber serves as the skeleton of the non-woven fabric. By simultaneously introducing a circular structural fiber (i.e., the above-mentioned circular cross-section fiber) and a profiled structural fiber (i.e., the above-mentioned profiled fiber) into the non-woven fabric, and controlling the perimeter coefficient X_{L} of the cross section 1 of the profiled structural fiber to satisfy 1<X_{L}≤5, the strength of the non-woven fabric can be significantly improved and at the same time, a relatively thin thickness of the non-woven fabric can be maintained. Specifically, the non-woven fabric may exhibit a longitudinal tensile strength of up to 469kgf/cm² or more, or even up to 540kgf/cm² or more, and a transverse tensile strength of up to 300kgf/cm² or more, or even up to 330kgf/cm² or more, with a thickness of no more than 25µm. Therefore, the embodiments of the present invention provide a thin and high-strength non-woven fabric, which can be used for a separator and applied to electrochemical energy storage devices such as lithium-ion batteries, while also improving the safety, cycle life, and energy density and other properties of the electrochemical energy storage devices such as lithium-ion batteries.

In addition, according to the inventor's research, if the perimeter coefficient X_{L} of the above-mentioned profiled fiber is greater than 5, although the specific surface area of the fiber increases, excessive microstructures such as grooves and protrusions on the fiber surface can easily cause entanglement among the profiled fibers, making it easy for the structural fibers to form tangles and difficult to achieve thorough and uniform dispersion, which is not conducive to obtaining a non-woven fabric with high uniformity in performance.

In general, the non-woven fabric also includes a binder fiber with a softening point smaller than that of the structural fiber. The binder fiber is mainly used to for bonding components such as the structural fiber in the non-woven fabric, thereby enhancing the structural strength of the non-woven fabric.

Specifically, in the preparation process of the non-woven fabric, randomly dispersed fibers (including structural fibers and binder fibers) may usually be shaped through a heat calendering process, where the structural fibers, as the skeleton of the non-woven fabric structure, basically do not melt, however the binder fibers undergo partial or complete surface melting, thereby penetrating into the structures such as the fiber surface, the gaps and voids between fibers, or a concave-convex of the fiber. After cooling and solidification, a meshing force is generated in the interface region, so that the various fibers in the non-woven fabric are bonded to each other, achieving a firm bonding between the fibers, and endowing the non-woven fabric with structural strength.

In general, under the conditions of the same length of fiber and the same cross-section area of fiber, the specific surface area of the profiled fiber is significantly higher than that of the circular cross-section fiber. By introducing the above-mentioned profiled fiber whose perimeter coefficient X_{L} of the cross-section satisfying 1<X_{L}≤5 into the non-woven fabric, and utilizing the high specific surface area of the profiled fiber and the pore structure that can form a capillary effect between the fibers, the melted parts of the binder fibers can be infiltrated more sufficiently and quickly, thereby greatly increasing the bonding area between the fibers and significantly improving the structural strength of the non-woven fabric.

In some embodiments, the surface of the above-mentioned profiled fiber may be provided with a groove 10, so that the anchoring effect of the fiber bonding can be further strengthened. The melted part of the binder fiber penetrates into fine grooves 10 on the surface of the profiled fiber through capillary attraction, and after cooling and solidification, the fibers cannot move relative to each other, thereby achieving strong bonding between the fibers and further improving the structural strength of the non-woven fabric.

Specifically, in the profiled fiber, the groove 10 thereof may extend along the axial direction of the profiled fiber and penetrate through the profiled fiber in the axial direction of the profiled fiber, that is, the length of the groove 10 on the profiled fiber is equal to the length of the profiled fiber.

In addition, in the profiled fiber, the number of the grooves 10 may be one or more. When there are multiple grooves 10, these grooves 10 may be specifically distributed along the circumferential direction of the profiled fiber.

Specifically, in the profiled fiber, the number of grooves 10 may be less than or equal to 16, that is, one profiled fiber may be provided with 1 to 16 grooves 10. The number of grooves 10 is, for example, 1, 2, 3, 4, 5, 6, 7, 8, 9, 10, 11, 12, 13, 14, 15 or 16, etc., which is conducive to further improving the structural strength of the non-woven fabric.

In general, the non-woven fabric has multiple profiled fibers, and the number of grooves 10 of these profiled fibers may be the same or different. As mentioned above, the profiled fibers in at least one shape are present in the non-woven fabric, that is, there may be one type of profiled fibers or multiple types of profiled fibers. When there are multiple types of profiled fibers, the grooves 10 of any two types of profiled fibers may be the same or different in number.

After further research, from the perspective of sufficient infiltration, a width w of the groove 10 at its widest point is not less than 15% of a diameter D of a circumscribed circle 100 of the cross-section 1 of the profiled fiber, which is more conducive to expelling the air inside the groove 10, thereby enabling the fluid to fully infiltrate the interior of the groove 10 faster and better.

From the perspective of structural strength, a depth *h* of the groove 10 at its deepest point is no more than 75% of the diameter *D* of the circumscribed circle 100 of the cross section 1 of the profiled fiber. The bottom of the groove 10 is less likely to become a weak site of the structure itself and is less likely to tear under the action of relevant stress, thereby better maintaining the original shape of the groove 10.

In some embodiments, in the profiled fiber, the width w of the groove 10 at its widest point may be not less than 15% of the diameter D of the circumscribed circle 100 of the cross-section 1 of the profiled fiber (that is, w/D≥15%). Specifically, w/D may range from 15% to 100%, for example, 15%, 20%, 25%, 30%, 35%, 40%, 45%, 50%, 55%, 60%, 65%, 70%, 75%, 80%, 85%, 90%, 95%, 100% or a range composed of any two thereof, which may further improve the structural strength of the non-woven fabric.

**In** some embodiments, in the profiled fiber, the depth *h* of the groove 10 at its deepest point may not be higher than 75% of the diameter D of the circumscribed circle 100 of the cross-section 1 of the profiled fiber (that is, h/D≤75%). Specifically, h/D may satisfy 0< h/D≤75%, and h/D is, for example, 5%, 10%, 15%, 20%, 25%, 30%, 35%, 40%, 45%, 50%, 55%, 60%, 65%, 70%, 75% or a range composed of any two thereof, which may further improve the structural strength of the non-woven fabric.

The width w of the groove 10 at its widest point refers to a distance between two sidewall faces of the widest part of the groove 10, that is, the width w of the groove 10 at its widest point refers to a maximum straight-line distance between two sidewall faces constituting the groove 10. Specifically, the groove 10 has two sidewall faces, which are respectively located on opposite sides of the groove 10 (that is, one sidewall face is located on one side of the groove 10 and the other sidewall face is located on the other side of the groove 10). The length of each of the two sidewall faces in the length direction (axial direction) of the profiled fiber is equal to the length of the profiled fiber, where the maximum distance between the two sidewall faces in a direction perpendicular to the length direction of the profiled fiber is the width w of the groove 10 at its widest point.

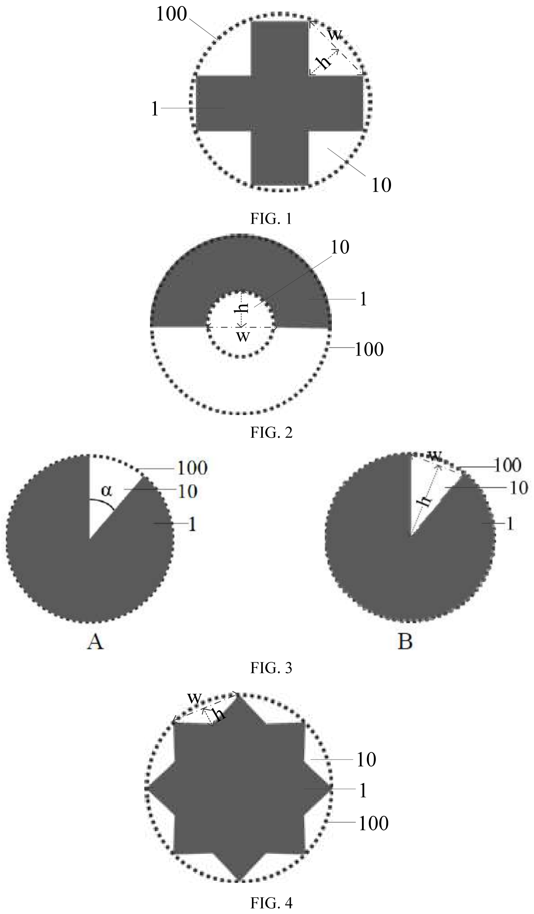

For example, referring to FIG. 1 to FIG. 19, the widest part of the groove 10 is the opening of the groove 10. At this time, the width w of the groove 10 at its widest point may specifically refer to a straight-line distance between two end points of an outermost edge of the cross-section contour line of the two sidewall faces constituting the groove 10. That is, in the cross-section 1 of the profiled fiber (the cross-section 1 being perpendicular to the axial direction of the profiled fiber), a straight-line distance between the endpoints, that are located at the opening of the groove 10, of the two sidewall faces enclosing the groove 10 is the width w of the widest part of the groove 10.

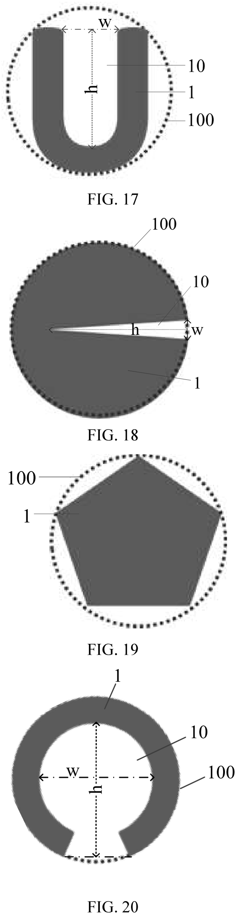

For example, referring to FIG. 20, the widest part of the groove is located in the interior of the groove 10. At this time, the width w of the groove 10 at its widest part is the distance between two sidewall faces of the groove 10 at its widest part.

In addition, continuing to refer to FIG. 1 to FIG. 20, the depth *h* of the groove 10 at its deepest point (i.e., the maximum depth of the groove 10) refers to a maximum vertical distance between the bottom of the groove 10 (the bottom surface of the groove 10 away from its opening) and the connecting line of the endpoints on the opposite sides of the opening of the groove 10, where in the cross-section 1 of the profiled fiber (the cross-section 1 is perpendicular to the axial direction of the profiled fiber), the straight line between the endpoints of two sidewall faces enclosing the groove 10 at the opening of the groove 10 is the above-mentioned connecting line.

It can be understood that the above-mentioned straight line, connecting line and contour line are used for illustrating the width w of the groove 10 at its widest point and the depth *h* of the groove 10 at its deepest point, and they are all virtual lines, not physically existing structures.

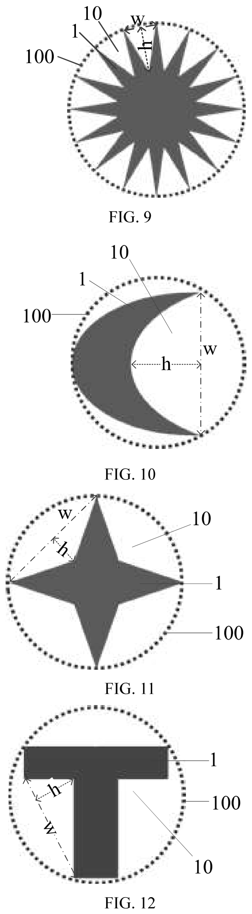

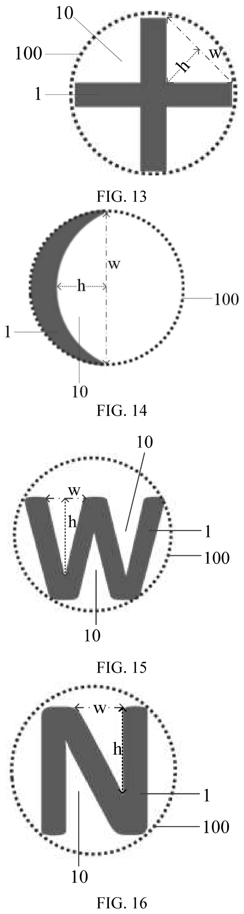

Specifically, the shape of the cross section 1 of the above-mentioned profiled fiber may include a heart shape, a dumbbell shape, a meniscus shape (as shown in FIG. 10), a crescent shape (as shown in FIG. 14), an incomplete circular ring shape, an incomplete circle shape, a multi-leaf grass shape, a polygonal shape, a character shape or a plum blossom shape, but is not limited to those, and may also be other regular or irregular shapes.

Where, a central angle corresponding to an outer circle arc of the incomplete circular ring shape is smaller than a central angle corresponding to an outer circle arc of a complete concentric circular ring of the incomplete circular ring shape. For example, the incomplete circular ring shape includes a semicircular ring shape (that is, the central angle corresponding to the outer circle arc of the incomplete circular ring shape is 1/2 of the central angle corresponding to the outer circle arc of the complete concentric circular ring of the incomplete circular ring shape, as shown in FIG. 2), or a two-thirds circular ring shape (that is, the central angle corresponding to the outer circle arc of the incomplete circular ring shape is 2/3 of the central angle corresponding to the outer circle arc of the complete concentric circular ring of the incomplete circular ring shape), or an incomplete circular ring shape as shown in FIG. 20.

Where, the central angle *α* of the incomplete circle shape (including a sector shape, an arc shape and an open circle shape) is less than 360°. For example, the incomplete circle shape includes a seven-eighths circle shape (that is, the central angle *α* of the seven-eighths circle shape accounts for seven-eighths of 360°, as shown in FIG. 3 (A of FIG. 3 showing the central angle, and B of FIG. 3 showing the depth *h* at the deepest point and the width w at the widest point)); a three-quarters circle shape (that is, the central angle *α* of the three-quarters circle shape accounts for three-quarters of 360°) or a two-thirds circle shape (that is, the central angle *α* of the two-thirds circle shape accounts for two-thirds of 360°); or a circle shape as shown in FIG. 18.

Exemplarily, the multi-leaf grass shape includes a three-leaf clover shape or a four-leaf clover shape.

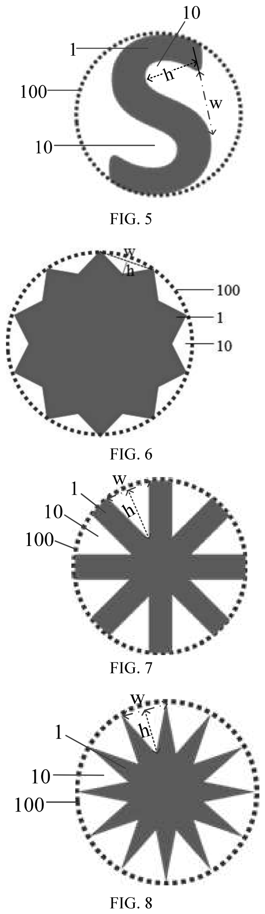

Exemplarily, the polygonal shape includes a pentagonal shape (as shown in FIG. 19), and may also include a multi-angular shape, which includes a triangular star shape, a quadrangular star shape (as shown in FIG. 11), a pentagonal star shape, a hexagonal star shape, an octagonal star shape (as shown in FIG. 4), a decagonal star shape (as shown in FIG. 6), a dodecagonal star shape (as shown in FIG. 8) or a hexadecagonal star shape (as shown in FIG. 9).

Exemplarily, the character shape includes a cross shape (as shown in FIG. 1 and FIG. 13), a double cross shape, a " 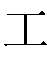 "-shape, a " 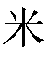 "-shape (as shown in FIG. 7), a " 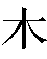 "-shape, a C-shape, an E-shape, an F-shape, a G-shape, an H-shape, a J-shape, a K-shape, an L-shape, an M-shape, an N-shape (as shown in FIG. 16), an S-shape (as shown in FIG. 5), a T-shape (as shown in FIG. 12), a U-shape (as shown in FIG. 17), a V-shape, a W-shape (as shown in FIG. 15), an X-shape, a Y-shape or a Z-shape.

Exemplarily, the plum blossom shape includes a four-petal plum blossom shape, a five-petal plum blossom shape, or a six-petal plum blossom shape.

In some embodiments, a ratio of the mass of the profiled fiber to the mass of the structural fiber (a mass percentage of the profiled fiber in the structural fiber) may be 5% to 60%, for example, 5%, 10%, 15%, 20%, 25%, 30%, 35%, 40%, 45%, 50%, 55%, 60% or a range composed of any two thereof, which is beneficial for improving the structural strength of the non-woven fabric.

In addition, a ratio of the mass of the circular cross-section fiber to the mass of the structural fiber (the mass percentage of the circular cross-section fiber in the structural fiber) may be 40% to 95%, for example, 40%, 45%, 50%, 55%, 60%, 65%, 70%, 75%, 80%, 85%,

90%, 95% or a range composed of any two thereof, which is beneficial for improving the structural strength of the non-woven fabric.

In some embodiments, a ratio of the mass of the structural fiber to the mass of the non-woven fabric (i.e., the mass percentage of the structural fiber in the non-woven fabric) may be 60% to 85%, for example, 60%, 63%, 65%, 68%, 70%, 73%, 75%, 78%, 80%, 83%, 85% or a range composed of any two thereof, which is beneficial for improving the structural strength of the non-woven fabric.

The linear density of the fiber indicates the fineness of the fiber. With other conditions being equal, overly thick fibers will increase the bulkiness of the non-woven fabric, which is not beneficial to its performance in battery separators and electrolyte membranes. Taking the separator as an example, if the non-woven fabric in the separator is too thick (with excessively high linear density), its increased bulkiness raises the separator's ion transport resistance and alters its diffusion coefficients. Consequently, this leads to uneven ion transport (e.g., lithium ions) and non-uniform ion distribution at the electrode interface. The nonuniformity of ions moving in and out of the electrode through the separator may cause incomplete lithium intercalation and deintercalation, as well as local overcharge or overdischarge, etc., thereby affecting the safety, service life, and other properties of the battery.

Therefore, in some preferred embodiments, the linear density of the above-mentioned structural fiber may be less than or equal to 0.4dtex. That is, the linear density of the above-mentioned circular cross-section fiber may be less than or equal to 0.4dtex, and the linear density of the profiled fiber may be less than or equal to 0.4dtex, which can prevent the non-woven fabric from being too thick and heavy, making it easier for the non-woven fabric to be used in battery separators and electrolyte membranes, and further improving the safety, cycle life, and other properties of the battery.

Further, the linear density of the above-mentioned structural fiber (the circular cross-section fiber or profiled fiber) may be 0.05dtex to 0.4dtex, for example, 0.05dtex, 0.06dtex, 0.08dtex, 0.1 dtex, 0.15dtex, 0.2dtex, 0.25dtex, 0.3dtex, 0.35dtex, 0.4dtex or a range composed of any two thereof.

Where, the linear density of the circular cross-section fiber and the linear density of the profiled fiber may be the same or different, that is, the linear density of the circular cross-section fiber may be greater than, equal to, or less than the linear density of the profiled fiber. In addition, in some preferred embodiments, the linear density of the binder fiber is less than or equal to 0.8dtex, which is beneficial for the use of the non-woven fabric in battery separators and electrolyte membranes, and improving the safety, cycle life, and other properties of the battery.

Furthermore, the linear density of the binder fiber may be 0.2dtex to 0.8dtex, for example, 0.2dtex, 0.3dtex, 0.4dtex, 0.5dtex, 0.6dtex, 0.7dtex, 0.8dtex or a range composed of any two thereof.

Where, the linear density of the binder fiber and the linear density of the structural fiber (the circular cross-section fiber or profiled fiber) may be the same or different, that is, the linear density of the binder fiber may be greater than, equal to or less than the linear density of the circular cross-section fiber, and the linear density of the binder fiber may be greater than, equal to or less than the linear density of the profiled fiber.

In addition, the length of the structural fiber may be 1mm to 3mm, that is, the length of the circular cross-section fiber may be 1mm to 3mm, and the length of the profiled fiber may be 1mm to 3mm, which is conducive to further improving the structural strength and other properties of the non-woven fabric.

Exemplarily, the length of the structural fiber (the circular cross-section fiber and profiled fiber) may specifically be 1mm, 1.3mm, 1.5mm, 1.8mm, 2mm, 2.3mm, 2.5mm, 2.8mm, 3mm or a range composed of any two thereof.

Where, the length of the circular cross-section fiber and the length of the profiled fiber may be the same or different, that is, the length of the circular cross-section fiber may be greater than, equal to, or less than the length of the profiled fiber.

In addition, the length of the binder fiber may be 1mm to 3mm, for example, 1mm, 1.3mm, 1.5mm, 1.8mm, 2mm, 2.3mm, 2.5mm, 2.8mm, 3mm, or a range composed of any two thereof.

Where, the length of the binder fiber and the length of the structural fiber (the profiled fiber, the circular cross-section fiber) may be the same or different, that is, the length of the binder fiber may be greater than, equal to or less than the length of the circular cross-section fiber, and the length of the binder fiber may be greater than, equal to or less than the length of the profiled fiber.

The linear density of the structural fiber and the linear density of the binder fiber mentioned above, both refer to average linear density, which may be measured by conventional methods in the art, for example, they may be measured in accordance with GB/T 14335-2008 Testing method for linear density of man-made staple fibers.

The length of the structural fiber and the length of the binder fiber mentioned above, both refer to average length, which may be measured by conventional methods in the art, for example, they may be measured in accordance with GB/T 14336-2008 Testing method for length of man-made staple fibers.

In addition, in order to ensure that the structural fiber in the non-woven fabric will not or will substantially not undergo changes in its morphological structure due to melting or softening during the processing when the binder fiber melts and softens, the softening point of the structural fiber is greater than the softening point of the binder fiber. For better maintenance of the morphological structure of the structural fiber, it is preferred that the difference between the softening point of the structural fiber and the softening point of the binder fiber is greater than or equal to 20°C, that is, the difference between the softening point of the circular cross-section fiber and the softening point of the binder fiber may be greater than or equal to 20°C, and the difference between the softening point of the profiled fiber and the softening point of the binder fiber may be greater than or equal to 20°C.

Where, the softening point of the circular cross-section fiber and the softening point of the profiled fiber may be the same or different, that is, the softening point of the circular cross-section fiber may be greater than, equal to, or less than the softening point of the profiled fiber.

In some embodiments, the difference between the softening point of the structural fiber (the circular cross-section fiber or profiled fiber) and the softening point of the binder fiber may specifically be 20°C to 280°C, for example, 20°C, 25°C, 30°C, 35°C, 40°C, 45°C, 50°C, 55°C, 60°C, 65°C, 70°C, 75°C, 80°C, 90°C, 95°C, 100°C, 110°C, 120°C, 125°C, 130°C, 135°C, 140°C, 145°C, 150°C, 160°C, 165°C, 170°C, 180°C, 190°C, 195°C, 200°C, 205°C, 210°C, 220°C, 230°C, 240°C, 250°C, 252°C, 255°C, 260°C, 265°C, 270°C, 275°C, 280°C or a range composed of any two thereof.

In some embodiments, the softening point of the structural fiber (the circular cross-section fiber or profiled fiber) may be 240°C to 400°C, for example, 240°C, 245°C, 250°C, 260°C, 270°C, 280°C, 290°C, 300°C, 310°C, 320°C, 330°C, 340°C, 350°C, 360°C, 370°C, 380°C, 390°C, 400°C or a range composed of any two thereof.

Specifically, the softening point of the binder fiber may be greater than or equal to 120°C. In some embodiments, the softening point of the binder fiber may be 120°C to 230°C, for example, 120°C, 125°C, 130°C, 135°C, 140°C, 145°C, 150°C, 155°C, 160°C, 165°C, 170°C, 175°C, 180°C, 185°C, 190°C, 195°C, 200°C, 205°C, 210°C, 215°C, 220°C, 225°C, 230°C, or a range composed of any two thereof.

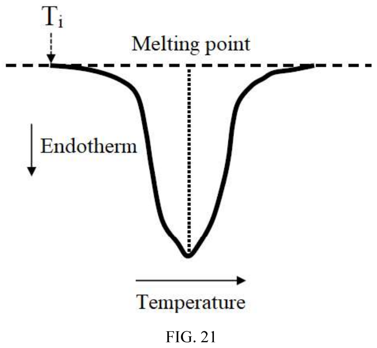

In specific implementation, the softening points of the above-mentioned structural fiber and binder fiber may be measured using a differential scanning calorimeter (DSC). Specifically, a differential scanning calorimeter (DSC) is used to determine the differential scanning calorimetry curve of the fiber through a programmed temperature rise mode, and a starting point temperature Tᵢ at which the melting endothermic peak in the obtained curve begins to deviate from the baseline is adopted to characterize the softening point of the fiber (as shown in FIG. 21). The specific testing method may refer to GB/T 19466.3-2004 (Plastics Differential scanning calorimetry (DSC) Part 3: Determination of temperature and enthalpy of melting and crystallization).

In some embodiments, the binder fiber may include one or more of undrawn polyester fiber, polyvinylidene fluoride (PVDF) fiber, polyamide fiber, polyolefin fiber, copolyester fiber, or copolyamide fiber.

Optionally, the undrawn polyester fiber may include at least one of undrawn polyethylene terephthalate (PET) fiber or undrawn polybutylene terephthalate fiber.

Optionally, the polyolefin fiber may include one or more of polyethylene (PE) fiber, polypropylene (PP) fiber, polyvinyl chloride fiber, polystyrene fiber, polyethylene/polypropylene sheath-core fiber, polyethylene/polyethylene terephthalate sheath-core fiber, and polyethylene/polybutylene terephthalate sheath-core fiber.

Specifically, the binder fiber may include a bicomponent fiber formed by two types of fiber materials, the two fiber materials being, for example, polyethylene and polypropylene, or polyethylene and polyethylene terephthalate, or polyethylene and polybutylene terephthalate. The bicomponent fiber may include parallel type fiber, sheath-core type fiber, multi-core type composite fiber, sea-island type composite fiber and other structures, and the bicomponent fiber of the corresponding structure may be prepared according to conventional procedures in the art.

Where, the sheath-core fiber has a sheath-core structure. That is, in the two fiber materials forming the bicomponent sheath-core fiber, one fiber material forms a core layer, and the other fiber material forms a sheath layer present on the surface of the core layer. The sheath layer may specifically be wrapped around a circumferential side of the core layer, thereby forming a sheath-core structure.

For example, the binder fiber may include a PE/PP bicomponent fiber, and the PE/PP bicomponent fiber may specifically be a PE/PP bicomponent sheath-core fiber (i.e., the above-mentioned polyethylene/polypropylene sheath-core fiber). The PE/PP bicomponent sheath-core fiber includes a core layer and a sheath layer present on the surface of the core layer; the sheath layer may specifically be wrapped around the circumferential side of the core layer; the core layer includes PE, and the sheath layer includes PP.

Optionally, the copolyester fiber may include at least one of copolyethylene terephthalate fiber (CoPET) or copolybutylene terephthalate fiber (CoPBT).

Optionally, the copolyamide fiber is formed by copolymerizing monomers of at least two polyamides, and the at least two polyamides include, for example, at least one or more of one or more polyamide 6 (PA6), polyamide 11 (PA11), polyamide 12 (PA12), polyamide 66 (PA66), polyamide 69 (PA69), polyamide 610 (PA610), polyamide 612 (PA612), and polyamide 1010 (PA1010). That is, the copolyamide fiber may be a copolymer of monomers of at least two of these polyamides.

Specifically, the copolyamide fiber may include at least one of binary copolyamide, ternary copolyamide, or quaternary copolyamide.

In some embodiments, the copolyamide fiber may include one or more of PA6/6 (a binary copolyamide 6/6 formed by copolymerizing monomers of polyamide 6 with different molecular weights or degrees of polymerization), PA6/66 (a binary copolyamide 6/66 formed by copolymerizing monomers of polyamide 6 and monomers of PA66), PA6/66/12 (a ternary copolyamide 6/66/12 formed by copolymerizing monomers of polyamide 6, monomers of polyamide 66, and monomers of polyamide 12), PA6/66/69 (a ternary copolyamide 6/66/69 formed by copolymerizing monomers of polyamide 6, monomers of polyamide 66, and monomers of polyamide 69), PA6/66/610 (a ternary copolyamide 6/66/610 formed by copolymerizing monomers of polyamide 6, monomers of polyamide 66, and monomers of polyamide 610), PA6/66/612 (a ternary copolyamide 6/66/612 formed by copolymerizing monomers of polyamide 6, monomers of polyamide 66, and monomers of polyamide 612), PA6/66/1010 (a ternary copolyamide 6/66/1010 formed by copolymerizing monomers of polyamide 6, monomers of polyamide 66 and monomers of polyamide 1010), PA6/612/12 (a ternary copolyamide 6/612/12 formed by copolymerizing monomers of polyamide 6, monomers of polyamide 612, and monomers of polyamide 12), PA6/610/12 (a ternary copolyamide 6/610/12 formed by copolymerizing monomers of polyamide 6, monomers of polyamide 610, and monomers of polyamide 12), PA6/66/69/12 (a quaternary copolyamide 6/66/69/12 formed by copolymerizing monomers of polyamide 6, monomers of polyamide 66, monomers of polyamide 69, and monomers of polyamide 12), and PA6/66/11/12 (a quaternary copolyamide 6/66/11/12 formed by copolymerizing monomers of polyamide 6, monomers of polyamide 66, monomers of polyamide 11, and monomers of polyamide 12).

In some embodiments, the structural fiber (i.e., circular cross-section fiber and profiled fiber) may include one or more of polyester fiber, polyolefin fiber, polyamide fiber, polyimide fiber (PI), polytetrafluoroethylene fiber (PTFE), polyphenylene sulfide fiber (PPS), polyetheretherketone fiber, polyacrylonitrile fiber (PAN), polycarbonate fiber, and aramid fiber. Polyester fiber includes one or more of polyethylene terephthalate (PET), polybutylene terephthalate, polytrimethylene terephthalate, and polyisophthalic acid resin. Polyolefin fiber includes one or more of polyethylene, polypropylene (PP), polyvinyl chloride, and polystyrene. Polyamide fiber includes PA66.

Where, the material of the circular cross-section fiber and the material of the profiled fiber may be the same or different.

In addition, the above-mentioned non-woven fabric may have a thickness less than or equal to 25µm, and may have strong structural strength while maintaining a relatively small thickness. In some embodiments, the thickness of the non-woven fabric may specifically be 5µm to 25µm, for example, 5µm, 8µm, 10µm, 13µm, 15µm, 18µm, 20µm, 23µm, 25µm or a range composed of any two thereof, which is more conducive to its use in battery separators or electrolyte membranes, balancing the improvement of the properties of battery such as energy density and safety.

In addition, the areal density of the non-woven fabric may be 4g/m² to 20g/m², for example, 4g/m², 7g/m², 10g/m², 13g/m², 15g/m², 18g/m², 20g/m² or a range composed of any two thereof.

In addition, the density of the non-woven fabric may be 0.5g/cm³ to 0.9g/cm³, for example, 0.5g/cm³, 0.6g/cm³, 0.7g/cm³, 0.8g/cm³, 0.9g/cm³ or a range composed of any two thereof.

The above-mentioned non-woven fabric may be made by conventional methods in the art, and there is no particular limitation thereon. For example, raw materials for forming non-woven fabric (such as the above-mentioned structural fiber and binder fiber, etc.) are used to form a non-woven base paper through conventional equipment in the art like an inclined wire papermaking machine, and then the formed fiber base paper obtained is subjected to heat calendering treatment using a heat-calender machine, which may employ a steel roll/soft roll combination or a steel roll/steel roll combination; and the temperature of heat calendering treatment is, for example, 100°C to 300°C. After the heat calendering treatment, the non-woven fabric is obtained.

The separator provided by some embodiments of the present invention includes the above-mentioned non-woven fabric, that is, the separator is a non-woven fabric separator. As mentioned above, the above-mentioned non-woven fabric may have both a relatively small thickness and a relatively high structural strength, which may be used for the separator, reducing the thickness of the separator and improving the strength of the separator, thereby balancing the improvement of the properties such as safety, cycle life and energy density of an electrochemical energy storage device such as a lithium-ion battery that adopts the separator.

Specifically, an electrochemical device such as a lithium-ion battery includes a positive electrode sheet and a negative electrode sheet, with the above-mentioned separator being located between the positive electrode sheet and the negative electrode sheet to separate the positive electrode sheet from the negative electrode sheet. The separator may specifically be applied in a liquid battery, a semi-solid-state battery or a solid-state battery. When applied to the semi-solid-state battery or the solid-state battery, it also plays the role of an electrolyte, that is, serving as an electrolyte membrane to replace the electrolyte solution. Of course, in the semi-solid-state battery, it is generally still necessary to inject the electrolyte solution.

In general, the above-mentioned separator may also include a component compounded with the non-woven fabric. The non-woven fabric serves as the skeleton of the separator and is used to carry the component. The component may specifically be filled into the interior of the non-woven fabric, for example, it may penetrate into the structures such as the surface, the gaps, the voids, or the concave-convex of the fibers inside the non-woven fabric. In addition, the component may also form a coating on the surface of the non-woven fabric.

Fibers are the skeleton of non-woven fabric. Characteristics such as the morphology and arrangement of fibers in the non-woven fabric determine the internal pore structure of the non-woven fabric. The cross-section 1 of profiled fiber is irregular in shape. By introducing the profiled fiber into the non-woven fabric, characteristics such as the number and size of capillary pores inside the non-woven fabric may be regulated. At the same time, the specific surface area as well as the capillary effect of fibers and fiber networks in the non-woven fabric are significantly increased, thereby facilitating the non-woven fabric to enhance the absorption, transfer and retention of the components compounded with the non-woven fabric, and optimizing the performance of the non-woven fabric separator.

Specifically, when the above-mentioned separator is applied to a liquid battery, the component compounded with the non-woven fabric in the separator may include inorganic particle, polymer or a combination thereof.

Specifically, when the above-mentioned separator is applied to a semi-solid-state battery or a solid-state battery, the component compounded with the non-woven fabric in the separator (electrolyte membrane) may be a solid-state electrolyte, which may specifically include one or more of polymer electrolyte, oxide electrolyte, sulfide electrolyte, etc., but is not limited thereto.

In some specific implementations, the components for compounding with the non-woven fabric may be prepared into a slurry, which is then coated on the non-woven fabric and subjected to treatments such as drying to form a coating.

When the above-mentioned separator is an electrolyte membrane (for example, an electrolyte membrane applied to a solid-state battery or a semi-solid-state battery), by adopting the above-mentioned non-woven fabric containing the profiled fiber with the cross section perimeter coefficient X_{L} satisfying 1<X_{L}≤5, the contact area between the non-woven fabric and the solid-state electrolyte can be greatly increased, and the adsorption and retention capacity for solid-state electrolyte of the non-woven fabric can be enhanced, which is conducive to more sufficient and effective filling of the solid-state electrolyte in the non-woven fabric, improving the filling density and loading capacity of the solid-state electrolyte in the non-woven fabric, and ameliorating the issue of interface contact of the solid-state electrolyte. At the same time, the strong bonding of the solid-state electrolyte and the non-woven fabric can be achieved through the anchoring effect, which is conducive to reducing the solid/solid interface impedance between the solid-state electrolyte and the non-woven fabric fiber. Therefore, by adopting the electrolyte membrane of the embodiment of the present invention, balanced improvement in the performance of the electrochemical energy storage devices such as lithium-ion batteries, such as safety, cycle life, energy density, and rate capability can be achieved.

Specifically, with the above-mentioned non-woven fabric, during the preparation process of the electrolyte membrane, the solid-state electrolyte slurry enters the internal pores of the non-woven fabric through capillary effect. When the profiled fiber in the non-woven fabric has a groove 10, the solid-state electrolyte slurry will also enter into the fine groove 10 on the surface of the profiled fiber. The strong wicking effect and capillary effect facilitate the solid-state electrolyte slurry to spontaneously moisten and aggregate on the fiber surface and/or transfer to the internal pores of the non-woven fabric, thereby greatly increasing the contact area between the non-woven fabric and the solid-state electrolyte and enhancing the ability of the non-woven fabric to adsorb and retain the solid-state electrolyte, which is beneficial for improving the filling density and loading capacity of the solid-state electrolyte in the non-woven fabric, achieving a more sufficient and effective filling, and ameliorating the issue of interface contact of the solid-state electrolyte. At the same time, a strong bonding between the solid-state electrolyte and the non-woven fabric is achieved through anchoring effect, and the solid-state electrolyte slurry penetrates into the structures such as the surface, the gaps, the voids, or the concave-convex of the fibers inside the non-woven fabric. After drying and solidification, a meshing force is generated at the contact section, thereby realizing high bonding strength between the solid-state electrolyte and the non-woven fabric, which is beneficial for reducing the solid/solid interface impedance between the solid-state electrolyte and the non-woven fabric fiber, and thus effectively improving the battery's performance such as rate capability.

In addition, in the embodiment of the present invention, when the above-mentioned separator is applied to a liquid battery (where ions such as lithium ions are conducted through an electrolyte solution) or a semi-solid-state battery injected with an electrolyte solution, the high specific surface area of the fibers inside the non-woven fabric may also increase the liquid absorption rate of the non-woven fabric separator to the electrolyte solution. Especially when the surface of the profiled fiber is provided with the groove 10, the capillary force generated by the fine grooves 10 on the fiber surface enables the electrolyte solution to quickly infiltrate the surface and interior of the non-woven fabric through wicking effect, so that the liquid absorption rate and liquid retention capacity of the non-woven fabric separator to the electrolyte solution are significantly enhanced, and a stable adsorption layer of electrolyte solution may also be formed on the surface of the non-woven fabric, thereby reducing the penetration resistance of the electrolyte solution in the battery and improving the interface properties of the separator. At the same time, by utilizing properties such as the pores with high specific surface area of the non-woven fabric and the capillary force of the fine grooves 10 of the fibers, the ability of the non-woven fabric separator to retain the electrolyte solution entering into the interior of the non-woven fabric is enhanced, which is beneficial for achieving rapid transfer of ions (such as lithium ions) and can effectively prevent electrolyte solution leakage and other phenomena, as well as resulting problems such as electrolyte solution depletion during use of the separator.

In the related art, in order to form a continuous coating layer, it is usually necessary to apply a relatively large amount of slurry, which leads to defects such as excessive thickness of the non-woven fabric separator. However, in the embodiments of the present invention, by adopting the above-mentioned non-woven fabric containing the profiled fiber with the cross-section perimeter coefficient X_{L} satisfying 1<X_{L}≤5, the specific surface area of the non-woven fabric surface is greatly improved, and the ability of the non-woven fabric to adsorb and retain the slurry is enhanced. Therefore, a continuous coating layer may be formed by applying a small amount of coating on the outer surface of the non-woven fabric. Compared with the existing non-woven fabric separator, in the embodiment of the present invention, the slurry is less likely to excessively penetrate into the interior of the non-woven fabric, and even less likely to penetrate from the slurry-coated side (front side) of the non-woven fabric to the other side (back side) of the non-woven fabric. Both the amount of slurry used and the thickness of the coating layer formed can be significantly reduced, thereby reducing the bulkiness of the separator. At the same time, the irregular cross-section of the profiled fiber in the non-woven fabric enhances the anchoring effect of the combination of the non-woven fabric and the coating layer, and realizes a strong bonding between the coating layer and the non-woven fabric, thereby obtaining a non-woven fabric separator with excellent performance.

**In** addition, the separator of the embodiments of the present invention may also be applied to a solid-state battery prepared by adopting the technical route of in-situ polymerization of polymer electrolyte. During the preparation process of the battery, a liquid injection process is required to inject a solution of electrolyte (electrolyte solution) into the battery cell for in-situ polymerization reaction (the electrolyte solution contains monomers used for polymerization to form a gel polymer electrolyte, that is, during the process of the in-situ polymerization reaction, the monomers are in-situ polymerized into the gel polymer electrolyte). In the embodiments of the present invention, by introducing the profiled fiber with the cross section perimeter coefficient X_{L} satisfying 1<X_{L}≤5 into the non-woven fabric, especially when the surface of the profiled fiber is provided with the groove 10, the non-woven fabric may also achieve rapid absorption and excellent flow-guiding effect of electrolyte solution, thereby promoting the uniform and rapid transmission and diffusion of the electrolyte solution in the battery system, as well as the uniformity of the electrolyte solution dispersion, and improving the efficiency of the in-situ polymerization reaction.

The battery provided by the embodiments of the present invention includes a positive electrode sheet, a negative electrode sheet and the above-mentioned separator, and the separator is located between the positive electrode sheet and the negative electrode sheet.

As mentioned above, the battery of the embodiments of the present invention may be a liquid battery, a semi-solid-state battery or a solid-state battery, and these batteries may have conventional structures in the art, and there is no particular limitation on this. By adopting the above-mentioned separator, it is possible to balance the improvement of the properties such as safety, cycle life and energy density of the battery.

The present invention is further described below through specific embodiments. In the following embodiments, the shape of the cross section 1 of the profiled fiber of Embodiment 1 is as shown in FIG. 1, the shape of the cross section 1 of the profiled fiber of Embodiment 2 is as shown in FIG. 9, the shape of the cross section 1 of the profiled fiber of Embodiment 3 is as shown in FIG. 3, the shape of the cross section 1 of the profiled fiber of Embodiment 4 is as shown in FIG. 4, the shape of the cross section 1 of the profiled fiber of Embodiment 5 is as shown in FIG. 5, the shape of the cross section 1 of the profiled fiber of Embodiment 6 is as shown in FIG. 6, the shape of the cross section 1 of the profiled fiber of Embodiment 7 is as shown in FIG. 7, the shape of the cross section 1 of the profiled fiber of Embodiment 8 is as shown in FIG. 8, the shape of the cross section 1 of the profiled fiber of Embodiment 9 is as shown in FIG. 9, the shape of the cross section 1 of the profiled fiber of Embodiment 10 is as shown in FIG. 10, the shape of the cross section 1 of the profiled fiber of Embodiment 11 is as shown in FIG. 11, the shape the cross section 1 of the profiled fiber of Embodiment 12 is as shown in FIG. 12, the shape of the cross-section 1 of the profiled fiber of Embodiment 13 is as shown in FIG. 13, the shape of the cross-section 1 of the profiled fiber of Embodiment 14 is as shown in FIG. 14, the shape of the cross-section 1 of the profiled fiber of Embodiment 15 is as shown in FIG. 15, the shape of the cross-section 1 of the profiled fiber of Embodiment 16 is shown in FIG. 16, the shape of the cross-section 1 of the profiled fiber of Embodiment 17 is as shown in FIG. 17, the shape of the cross-section 1 of the profiled fiber of Embodiment 18 is as shown in FIG. 18, and the shape of the cross-section 1 of the profiled fiber of Embodiment 19 is as shown in FIG. 19.

In each of the following embodiments and comparative embodiments, the structural fiber and the binder fiber are used to form a non-woven base paper by means of an inclined wire papermaking machine, and then the obtained base paper is hot-pressed and laminated to make a non-woven fabric.

The materials, softening points, linear densities, lengths, and contents of the structural fibers and binder fibers used in Embodiments 1 to 19 and Comparative Embodiment 1, as well as the shape of the cross-section 1 of the profiled fiber, the perimeter coefficient of the cross-section 1 of the profiled fiber, the number of the groove 10 of the profiled fiber, the ratio of the width w of the groove 10 at its widest point to the diameter D of the circumscribed circle 100 of the cross-section 1 of the profiled fiber (w/D in Table 1 and Table 2), the ratio of the depth *h* of the groove 10 at its deepest point to the diameter *D* of the circumscribed circle 100 of the cross-section 1 of the profiled fiber (h/D in Table 1 and Table 2), the thickness of the non-woven fabric, the areal density of the non-woven fabric, the density of the non-woven fabric, and the measured longitudinal tensile strength and transverse tensile strength of the non-woven fabric are shown in Table 1 and Table 2.

Where, the areal density of the non-woven fabric is measured in accordance with GB/T 451.2-2002; the thickness of the non-woven fabric is measured in accordance with GB/T 451.3-2002; the density of the non-woven fabric is a ratio of the areal density of the non-woven fabric to the thickness of the non-woven fabric; the tensile strength (transverse tensile strength and longitudinal tensile strength) of the non-woven fabric is measured in accordance with GB/T 12914-2008; the perimeter coefficient of the cross section 1 of the profiled fiber is measured according to FZ/T 50002-2013.

**Table 1**

| Embodiment | | | Embodiment 1 | Embodiment 2 | Embodiment 3 | Embodiment 4 |
|---|---|---|---|---|---|---|
| Structural fiber | Circular cross-section fiber | Material | PET | PI | PET | PPS |
| | | Softening point (°C) | 240 | 270 | 240 | 277 |
| | | Linear density (dtex) | 0.4 | 0.2 | 0.3 | 0.1 |
| | | Length (mm) | 3 | 2 | 3 | 2 |
| | | Content (wt%) | 80 | 30 | 30 | 56 |
| | Profiled fiber | Material | PET | PPS | PAN | PTFE |
| | | Softening point (°C) | 240 | 277 | 267 | 260 |
| | | Linear density (dtex) | 0.3 | 0.1 | 0.2 | 0.06 |
| | | Length (mm) | 3 | 3 | 2 | 2 |
| | | Content (wt%) | 5 | 30 | 45 | 24 |
| | | Shape of the cross section | Cross shape | Hexadecagonal star shape | Seven-eighths circle shape | Octagonal star shape |
| | | Number of the groove | 4 | 16 | 1 | 8 |
| | | Perimeter coefficient | 1.514 | 1.779 | 1.276 | 1.191 |
| | | w/D (%) | 40.21 | 19.00 | 33.85 | 37.25 |
| | | h/D (%) | 20.20 | 10.26 | 45.92 | 8.07 |
| Binder fiber | | Material | PET | PP | PVDF | PE/PP |
| | | Softening point (°C) | 220 | 155 | 160 | 125 |
| | | Linear density (dtex) | 0.8 | 0.4 | 0.5 | 0.2 |
| | | Length (mm) | 3 | 2 | 2 | 2 |
| | | Content (wt%) | 15 | 40 | 25 | 20 |
| Non-woven fabric | | Thickness (µm) | 22.0 | 11.9 | 15.0 | 9.0 |
| | | Areal density (g/m²) | 16.2 | 7.9 | 12.1 | 5.1 |
| | | Density (g/cm³) | 0.736 | 0.664 | 0.807 | 0.567 |
| | | Longitudinal tensile strength (kgf/cm²) | 588.7 | 569.6 | 540.5 | 498.7 |
| | | Transverse tensile strength (kgf/cm²) | 478.0 | 436.1 | 398.3 | 333.1 |

**Table 1 (Continue)**

| Embodiment | | | Embodiment 5 | Embodiment 6 | Embodiment 19 | Comparative Embodiment 1 | |
|---|---|---|---|---|---|---|---|
| Structural fiber | Circular cross-section fiber | Material | PAN | PET | PET | PET | PET |
| | | Softening point (°C) | 267 | 240 | 240 | 240 | 240 |
| | | Linear density (dtex) | 0.06 | 0.2 | 0.2 | 0.3 | 0.4 |
| | | Length (mm) | 2 | 2 | 2 | 3 | 3 |
| | | Content (wt%) | 52 | 30 | 30 | 5 | 80 |
| | Profiled fiber | Material | PA66 | PPS | PPS | / | |
| | | Softening point (°C) | 245 | 277 | 277 | / | |
| | | Linear density (dtex) | 0.4 | 0.1 | 0.1 | / | |
| | | Length (mm) | 2 | 3 | 3 | / | |
| | | Content (wt%) | 13 | 30 | 30 | / | |
| | | Shape of the cross section | S-shape | Decagonal star shape | Pentagonal shape | / | |
| | | Number of the groove | 2 | 10 | 0 | / | |
| | | Perimeter coefficient | 1.975 | 1.055 | 1.053 | / | |
| | | w/D (%) | 45.43 | 30.09 | / | / | |
| | | h/D (%) | 40.29 | 4.882 | 0 | / | |
| Binder fiber | | Material | PET | PP | PP | PET | |
| | | Softening point (°C) | 220 | 155 | 155 | 220 | |
| | | Linear density (dtex) | 0.3 | 0.4 | 0.4 | 0.8 | |
| | | Length (mm) | 3 | 2 | 2 | 3 | |
| | | Content (wt%) | 35 | 40 | 40 | 15 | |
| Non-woven fabric | | Thickness (µm) | 25.0 | 12.0 | 12.0 | 21.8 | |
| | | Areal density (g/m²) | 19.8 | 8.1 | 8.2 | 15.7 | |
| | | Density (g/cm³) | 0.792 | 0.675 | 0.683 | 0.720 | |
| | | Longitudinal tensile strength (kgf/cm²) | 662.9 | 469.8 | 444.7 | 368.6 | |
| | | Transverse tensile strength (kgf/cm²) | 538.8 | 321.4 | 302.3 | 280.4 | |

Note: The content in Table 1 refers to the mass percentage of the fiber in the non-woven fabric; "PE/PP" in Table 1 represents PE/PP two-component sheath-core fiber, with PE forming the core layer and PP forming the sheath layer.

In addition, the non-woven fabrics of Embodiments 7 to 18 are prepared by referring to the preparation process of the non-woven fabric of Embodiment 1. The difference between Embodiments 7 to 18 and Embodiment 1 lies in the different shapes of the profiled fibers used, which are specified in Table 2; except for the differences shown in Table 2, the other conditions are the same.

**Table 2**

| Embodiment | Profiled fiber | | | | |
|---|---|---|---|---|---|
| | Shape of the cross section | Number of the groove | Perimeter coefficient | w/D (%) | h/D (%) |
| Embodiment 7 | " 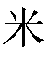 " -shape | 8 | 3.107 | 25.30 | 31.48 |
| Embodiment 8 | Dodecagonal star shape | 12 | 2.954 | 25.59 | 26.49 |
| Embodiment 9 | Hexadecagonal star shape | 16 | 4.299 | 22.08 | 29.81 |
| Embodiment 10 | Meniscus shape | 1 | 2.877 | 83.14 | 40.19 |
| Embodiment 11 | Quadrangular star shape | 4 | 1.736 | 70.51 | 16.57 |
| Embodiment 12 | T-shape | 2 | 1.604 | 61.35 | 25.98 |
| Embodiment 13 | Cross shape | 4 | 2.041 | 55.24 | 27.62 |
| Embodiment 14 | Crescent shape | 1 | 2.048 | 100 | 33.14 |
| Embodiment 15 | W-shape | 3 | 2.616 | 24.29 | 49.43 |
| Embodiment 16 | N-shape | 2 | 2.038 | 33.14 | 57.14 |
| Embodiment 17 | U-shape | 1 | 1.770 | 34.29 | 71.43 |
| Embodiment 18 | Open circular shape | 1 | 1.542 | 11.43 | 80.00 |

**Table 2 (Continue)**

| Embodiment | Non-woven fabric | | | | |
|---|---|---|---|---|---|
| | Thickness (µm) | Areal density (g/m²) | Density (g/cm³) | Longitudinal tensile strength (kgf/cm²) | Transverse tensile strength (kgf/cm²) |
| Embodiment 7 | 21.3 | 16.1 | 0.756 | 822.1 | 663.5 |
| Embodiment 8 | 21.8 | 15.9 | 0.729 | 798.3 | 638.2 |
| Embodiment 9 | 21.6 | 16.0 | 0.741 | 993.4 | 731.4 |
| Embodiment 10 | 21.2 | 15.8 | 0.745 | 763.7 | 609.5 |
| Embodiment 11 | 21.5 | 16.2 | 0.753 | 629.5 | 505.2 |
| Embodiment 12 | 21.9 | 16.1 | 0.735 | 604.1 | 486.6 |
| Embodiment 13 | 22.1 | 16.3 | 0.738 | 671.1 | 538.3 |
| Embodiment 14 | 21.4 | 15.7 | 0.734 | 688.4 | 550.1 |
| Embodiment 15 | 21.7 | 15.8 | 0.728 | 712.8 | 589.4 |
| Embodiment 16 | 22.0 | 16.2 | 0.736 | 665.3 | 541.5 |
| Embodiment 17 | 21.6 | 16.1 | 0.745 | 685.6 | 556.2 |
| Embodiment 18 | 21.9 | 15.9 | 0.726 | 421.6 | 291.9 |

It can be seen that, compared with Comparative Embodiment 1 (using two types of circular cross-section fibers instead of the profiled fiber), the introduction of profiled fibers with the perimeter coefficient X_{L} satisfying 1<X_{L}≤5 in Embodiments 1 to 19 can significantly improve the strength of the non-woven fabric while maintaining the relatively small thickness of the non-woven fabric.

Where, compared with Embodiment 19 (where no groove is provided on the surface of the profiled fiber), the profiled fiber in Embodiment 6 is provided with grooves, which can further improve the strength of the non-woven fabric.

Where, compared with Embodiment 18 (w/D<15%, h/D>75%), the profiled fibers in Embodiment 1 and Embodiments 7 to 17 satisfy w/D≥15% and h/D≤75%, which can further improve the strength of the non-woven fabric.

Finally, it should be noted that each of the above embodiments is only used to illustrate the technical solutions of the present invention, rather than to limit them. Although the present invention has been described in detail with reference to the aforementioned embodiments, those skilled in the art should understand that they can still modify the technical solutions recorded in the aforementioned embodiments, or equivalently replace some or all of the technical features therein; and these modifications or replacements do not make the essence of the corresponding technical solutions deviate from the scope of the technical solutions of the embodiments of the present invention.

## Claims

1. A non-woven fabric, comprising a structural fiber, wherein the structural fiber comprises a circular cross-section fiber and a profiled fiber; and a cross section of at least part of the profiled fibers has a perimeter coefficient being X_{L}, with 1<X_{L}≤5.

2. The non-woven fabric according to claim 1, wherein a surface of the profiled fiber is provided with a groove.

3. The non-woven fabric according to claim 2, wherein the groove extends along an axial direction of the profiled fiber and penetrates through the profiled fiber in the axial direction of the profiled fiber.

4. The non-woven fabric according to claim 2, wherein the groove is one or more in number, and when multiple grooves are provided, the multiple grooves are distributed along a circumferential direction of the profiled fiber.

5. The non-woven fabric according to claim 2, wherein the groove is less than or equal to 16 in number.

6. The non-woven fabric according to claim 2, wherein at least one of the following conditions is satisfied:
a. a width of the groove at its widest point is not less than 15% of a diameter of a circumscribed circle of the cross section of the profiled fiber;
b. a depth of the groove at its deepest point is not more than 75% of the diameter of the circumscribed circle of the cross section of the profiled fiber.

7. The non-woven fabric according to any one of claims 2 to 6, wherein a shape of the cross section of the profiled fiber comprises a heart shape, a dumbbell shape, a meniscus shape, a crescent shape, an incomplete circular ring shape, an incomplete circle shape, a multi-leaf grass shape, a polygonal shape, a character shape or a plum blossom shape;
optionally, the incomplete circle shape comprises a semicircular ring shape or a two-thirds circular ring shape;
optionally, the incomplete circle shape comprises a seven-eighths circle shape, a three-quarters circle shape or a two-thirds circle shape;
optionally, the multi-leaf grass shape comprises a three-leaf clover shape or a four-leaf clover shape;
optionally, the polygonal shape comprises a multi-angular shape, and the multi-angular shape comprises a triangular star shape, a quadrangular star shape, a pentagonal star shape, a hexagonal star shape, an octagonal star shape, a decagonal star shape, a dodecagonal star shape or a hexadecagonal star shape;
optionally, the character shape comprises a cross shape, a double cross shape, a " 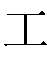 "-shape, a " 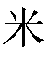 "-shape, a " 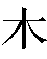 "-shape, a C-shape, an E-shape, an F-shape, a G-shape, an H-shape, a J-shape, a K-shape, an L-shape, an M-shape, an N-shape, an S-shape, a T-shape, a U-shape, a V-shape, a W-shape, an X-shape, a Y-shape or a Z-shape;
optionally, the plum blossom shape comprises a four-petal plum blossom shape, a five-petal plum blossom shape, or a six-petal plum blossom shape.

8. The non-woven fabric according to any one of claims 1 to 6, wherein at least one of the following conditions is satisfied:
a. a ratio of a mass of the profiled fiber to a mass of the structural fiber is 5% to 60%;
b. a ratio of the mass of the structural fiber to a mass of the non-woven fabric is 60% to 85%.

9. The non-woven fabric according to any one of claims 1 to 6, wherein at least one of the following conditions is satisfied:
a. a linear density of the structural fiber is less than or equal to 0.4dtex;
b. a length of the structural fiber is 1mm to 3mm.

10. The non-woven fabric according to any one of claims 1 to 6, further comprising a binder fiber, wherein a softening point of the structural fiber is greater than a softening point of the binder fiber.

11. The non-woven fabric according to claim 10, wherein at least one of the following conditions is satisfied:
a. a difference between the softening point of the structural fiber and the softening point of the binder fiber is greater than or equal to 20°C;
b. the softening point of the binder fiber is greater than or equal to 120°C.

12. The non-woven fabric according to claim 10, wherein at least one of the following conditions is satisfied:
a. a linear density of the binder fiber is less than or equal to 0.8dtex;
b. a length of the binder fiber is 1mm to 3mm.

13. The non-woven fabric according to claim 10, wherein the binder fiber comprises one or more of undrawn polyester fiber, polyvinylidene fluoride fiber, polyamide fiber, copolyamide fiber, polyolefin fiber, copolyester fiber, or copolyamide fiber;
optionally, the undrawn polyester fiber comprises at least one of polyethylene terephthalate fiber or polybutylene terephthalate fiber;
optionally, the polyolefin fiber comprises one or more of polyethylene fiber, polypropylene fiber, polyvinyl chloride fiber, polystyrene fiber, polyethylene/polypropylene sheath-core fiber, polyethylene/polyethylene terephthalate sheath-core fiber, or polyethylene/polybutylene terephthalate sheath-core fiber;
optionally, the copolyester fiber comprises at least one of CoPET or CoPBT;
optionally, the copolyamide fiber comprises one or more of PA6/6, PA6/66, PA6/66/12, PA6/66/69, PA6/66/610, PA6/66/612, PA6/66/1010, PA6/612/12, PA6/610/12, PA6/66/69/12, or PA6/66/11/12.

14. The non-woven fabric according to any one of claims 1 to 6, wherein at least one of the circular cross-section fiber and the profiled fiber comprises one or more of polyester fiber, polyolefin fiber, polyamide fiber, polyimide fiber, polytetrafluoroethylene fiber, polyphenylene sulfide fiber, polyetheretherketone fiber, polyacrylonitrile fiber, polycarbonate fiber, or aramid fiber;
optionally, the polyester fiber comprises one or more of polyethylene terephthalate fiber, polybutylene terephthalate fiber, polytrimethylene terephthalate fiber, or polyisophthalic acid resin fiber;
optionally, the polyolefin fiber comprises one or more of polyethylene fiber, polypropylene fiber, polyvinyl chloride fiber, or polystyrene fiber;
optionally, the polyamide fiber comprises PA66.

15. The non-woven fabric according to any one of claims 1 to 6, wherein at least one of the following conditions is satisfied:
a. a thickness of the non-woven fabric is 5µm to 25µm;
b. an areal density of the non-woven fabric is 4g/m² to 20g/m²;
c. a density of the non-woven fabric is 0.5g/cm³ to 0.9g/cm³.

16. A separator, comprising the non-woven fabric according to any one of claims 1 to 15.

17. A battery, comprising a positive electrode sheet, a negative electrode sheet and the separator according to claim 17, wherein the separator is located between the positive electrode sheet and the negative electrode sheet.

18. The battery according to claim 17, wherein the battery is a liquid battery, a semi-solid-state battery or a solid-state battery.
